# EUROPEAN PATENT SPECIFICATION

(11) **EP 1 808 585 B1**
(45) Date of publication and mention of the grant of the patent: **16.04.2014**
(21) Application number: 07000877.6
(22) Date of filing: 17.01.2007
(51) Int. Cl.: F02B 27/02, F02M 35/10, F02M 35/16

(54) **Vehicle**
Fahrzeug
Véhicule

(30) Priority: 20.09.2006 JP 2006253641; 17.01.2006 JP 2006009139
(43) Date of publication of application: 18.07.2007
(73) Proprietor: Yamaha Hatsudoki Kabushiki Kaisha, Iwata-shi, Shizuoka 438-8501 (JP)
(72) Inventor: Yokoi, Masato, Iwata-shi, Shizuoka-ken 438-8501, (JP)
(74) Representative: Grünecker, Kinkeldey, Stockmair & Schwanhäusser

(56) References cited:
- EP-A1- 1 464 824
- JP-A- 2 223 632
- JP-A- 59 218 329

## Description

The present invention relates to a vehicle and more particularly to a vehicle equipped with a funnel for introducing air to an intake port of an engine.

Intake devices are known that are equipped with a funnel for introducing air to an intake port of an engine (for example, see Patent Document 1). Patent Document 1 discloses an intake device equipped with a high speed funnel (a fixed funnel) for introducing air that enters from a front side (an upstream side of a case) to an intake port of an engine; a low speed funnel provided in the upper section of the high speed funnel; a moveable slide valve positioned between the high speed funnel and the low speed funnel and that can be slid to the low speed funnel side; a turning arm (connecting lever) that is attached to the slide valve; and a motor that drives the turning arm via an intermediate gear, a rocking gear, and the like. The intake device is structured such that, when the engine is rotating at low speed, the slide valve connects between the high speed funnel and the low speed funnel such that air intake is performed in a manner suitable for low speed rotation. In addition, when the engine is rotating at high speed, the slide valve moves inside the low speed funnel such that there is no longer connection between the high speed funnel and the low speed funnel. As a result, air intake is performed in a manner that is suitable for high speed rotation. In other words, the intake device performs variable air intake. Further, the motor and a section of the intermediate gear are positioned in a rear section to the outer side of a case (to the downstream side of the case) that covers the inside of the intake device.

Patent Document 1: JP-UM-A-63-177627

However, in the structure disclosed in Patent Document 1, the motor for moving the slide valve to vary air intake, and a section of the intermediate gear are disposed in a rear section (the downstream side of the case) of the intake device. This causes the difficulty that the rear section (the downstream side of the case) is made larger. As a result, normally, the space for disposing the fuel tank, which is disposed to the rear of the intake device, is made smaller, which causes the problem that the volume of the fuel tank has to be made smaller.

The prior art in document JP 59-218329 refers to a suction device of an internal combustion engine. This suction device comprises fixed pipes and moving pipes, whereas corresponding to the rotation speed of an engine, a driving shaft is turned through the working of a wire, running around pulleys, with the aid of a servo-motor, in order to move the moving pipes through racks gearing with pinions. Thereby the overall length of the suction passages may be extended. According to JP 59-218329, a vehicle equipped with such a suction device may also comprise a fuel tank, which is disposed to the upper side of the moving pipes in a running direction of the vehicle.

The invention has been devised in light of the above-described problems and it is an object of the invention to provide a vehicle that can inhibit reduction of the volume of a fuel tank disposed to the rear of a moveable funnel that varies air intake.

This objective is solved by a vehicle comprising: an engine having an intake port; a fixed funnel that introduces air to the intake port of the engine; a moveable funnel that is moveably disposed on the intake side of the fixed funnel and that introduces air to the intake port of the engine along with the fixed funnel; a parallel link that moveably supports the moveable funnel; a fuel tank disposed to the rear side of the moveable funnel in a running direction of the vehicle; and a motor that is disposed with respect to the moveable funnel, on the opposite side of the fuel tank, and that drives the parallel link in order to move the moveable funnel.

According to a preferred embodiment, the vehicle further comprises a case, in which the fixed funnel and the moveable funnel are disposed, wherein the funnel moving mechanism is disposed inside the case, and wherein the drive source is disposed to the outside of the case.

Preferably, the funnel moving mechanism comprises a link mechanism that moveably supports the moveable funnel.

Further, preferably an air filter portion is provided inside the case, and the drive source is positioned between an upstream side section and a downstream side section of the case, the upstream side section and the downstream side section being respectively upstream and downstream from the air filter portion.

Still further, preferably the drive source includes a drive shaft that extends from the outside to the inside of the case, and the vehicle further comprises a seal member that seals a gap between the drive shaft and the case.

Yet further still, preferably the seal member includes a bearing having a seal function, the bearing rotatably supporting the drive shaft of the drive source. Therein, the seal member may include an elastic member disposed in the gap between the drive shaft of the drive source and the case.

Further, preferably the drive source includes a motor, the motor includes a motor drive shaft that extends from the outside to the inside of the case, and the vehicle further comprises a turning lever that has one end side connected to the motor drive shaft, and that converts rotational motion of the motor drive shaft to linear motion.

According to another preferred embodiment, the vehicle further comprises a connecting lever that connects the other end side of the turning lever to the link mechanism.

Preferably, the link mechanism comprises a parallel link that has a plurality of link levers that moveably support the moveable funnel such that it is capable of parallel movement.

Further, preferably the link mechanism comprises a parallel link that has a plurality of link levers that moveably support the moveable funnel such that it is capable of parallel movement; and among the link levers, at least one of the link levers has one end that is connected to the connecting lever and has another end that is connected to the moveable funnel.

Yet further, preferably in the case that the engine is rotating at high speed, the link levers turn in one direction to move an opening of the moveable funnel on the fixed funnel side to a first position at which the opening is away from an opening on the intake side of the fixed funnel, and in the case that the engine is rotating at low speed, the link levers turn in a second direction that is opposite to the first direction to move the opening of the moveable funnel on the fixed funnel side to a second position at which the opening is in contact with the opening on the intake side of the fixed funnel.

Still further yet, preferably a turning amount of the link levers is adjusted such that the position of an opening surface of the moveable funnel on the intake side of the fixed funnel in the first position is the same as the position of the opening surface of moveable funnel on the intake side of the fixed funnel in the second position when viewed from an opening direction of the fixed funnel.

In the following, the present invention is explained in greater detail with respect to several embodiments thereof in conjunction with the accompanying drawings, wherein:
- Fig. 1: is a side view showing the overall structure of a motorcycle according to a first embodiment,
- Fig. 2: is a partial cross sectional view of a periphery section of a fuel tank and a cleaner box of the motorcycle of the first embodiment shown in Fig. 1,
- Fig. 3: is a side view of a periphery area of funnels of the motorcycle of the first embodiment shown in Fig. 1,
- Fig. 4: is a side view of the periphery area of the funnels of the motorcycle of the first embodiment shown in Fig. 1,
- Fig. 5: is a top view from the outside of the funnels and the fuel tank of the motorcycle of the first embodiment shown in Fig. 1,
- Fig. 6: is a front view of a periphery area of the funnels of the motorcycle of the first embodiment shown in Fig. 1,
- Fig.7: is a perspective view showing a state when moveable funnels of the motorcycle of the first embodiment shown in Fig. 1 have been moved to a separation position,
- Fig. 8: is a side view showing a state when the moveable funnels of the motorcycle of the first embodiment shown in Fig. 1 have been moved to the separation position,
- Fig. 9: is a perspective view showing a state when the moveable funnels of the motorcycle of the first embodiment shown in Fig. 1 have been moved to a contacting position,
- Fig. 10: is a side view showing a state when the moveable funnels of the motorcycle of the first embodiment shown in Fig. 1 have been moved to the contacting position,
- Fig. 11: is a plan view that illustrates the detailed structure of the periphery area of the funnels of the motorcycle of the first embodiment shown in Fig. 1,
- Fig. 12: is a perspective view of fixed funnels of the motorcycle of the first embodiment shown in Fig. 1,
- Fig. 13: is a front view of the fixed funnels of the motorcycle of the first embodiment shown in Fig. 1,
- Fig. 14: is a cross sectional view that illustrates the structure of screw insertion holes of the fixed funnels shown in Fig. 12 and Fig. 13,
- Fig. 15: is a front view of the moveable funnels of the motorcycle of the first embodiment shown in Fig. 1,

- Fig. 16: is a front view of a funnel moving mechanism of the motorcycle of the first embodiment shown in Fig. 1,
- Fig. 17: is a cross sectional view that illustrates the structure of a moving member of the funnel moving mechanism shown in Fig. 16,
- Fig. 18: is a front view of the funnel moving mechanism of the motorcycle of the first embodiment shown in Fig. 1,
- Fig. 19: is a cross sectional view that illustrates the structure of the moving member of the funnel moving mechanism shown in Fig. 18,
- Fig. 20: is a side view of a periphery area of funnels of a motorcycle according to a second embodiment,
- Fig. 21: is a view along the direction of arrow P that illustrates the detailed attachment structure of a motor according to the second embodiment shown in Fig. 20,
- Fig. 22: s a cross sectional view that illustrates the detailed attachment structure of the motor according to the second embodiment, and
- Fig. 23: s a cross sectional view that illustrates the detailed attachment structure of the motor according to the second embodiment.

### Description of the Reference Numerals and Signs:

- 12: Fuel tank
- 14: Engine
- 17a: Intake port
- 25, 55: Cleaner box (Case)
- 25c, 55c: Upstream side section
- 25d, 55d: Downstream side section
- 26: Air filter (Air filter portion)
- 27: Fixed funnel
- 27a: Opening
- 28: Moveable funnel
- 28a: Opening
- 28g: Opening surface
- 42: Parallel link (Link mechanism)
- 43: Upper side link lever (Link lever, Link mechanism)
- 44: Lower side link lever (Link lever, Link mechanism)
- 45, 65: Motor (Drive source)
- 45a, 65a: Output shaft (Drive shaft, Motor drive shaft)
- 46: Turning lever
- 48: Moving shaft (Connecting lever)
- 72: Seal bearing (Bearing)
- 73: Grommet (Elastic member)

Fig. 7
   Moveable funnel separation position
Fig. 8
   Moveable funnel separation position
Fig. 9
   Moveable funnel contacting position
Fig. 10
   Moveable funnel contacting position

Hereinafter embodiments will be explained with reference to the drawings.

### (First Embodiment)

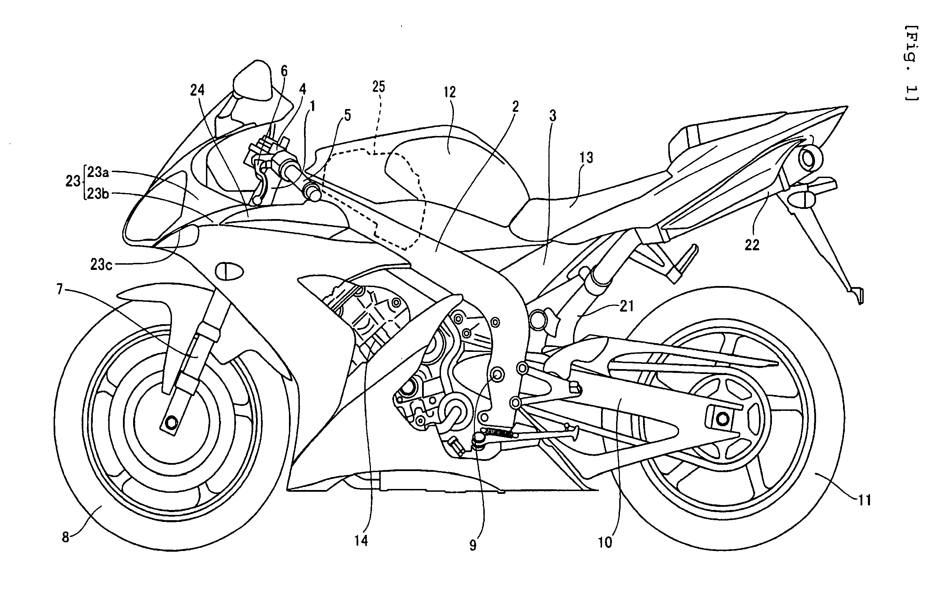

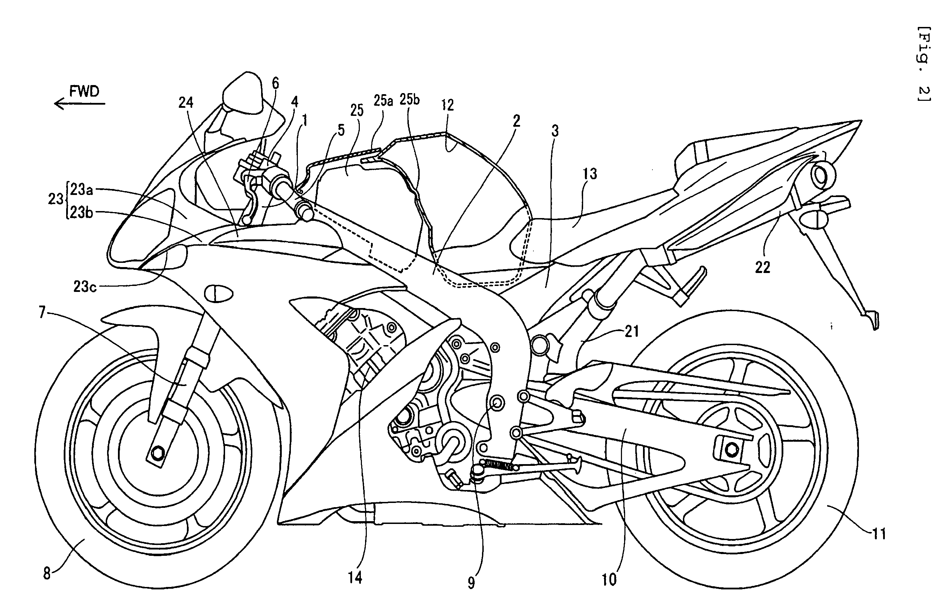

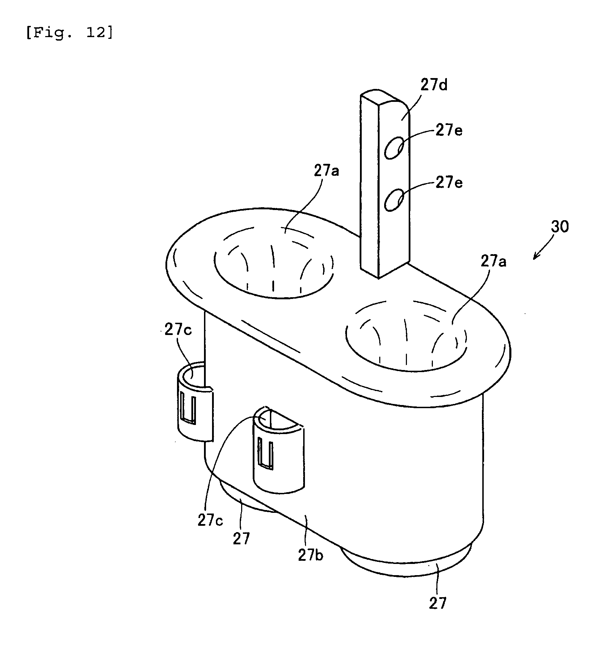

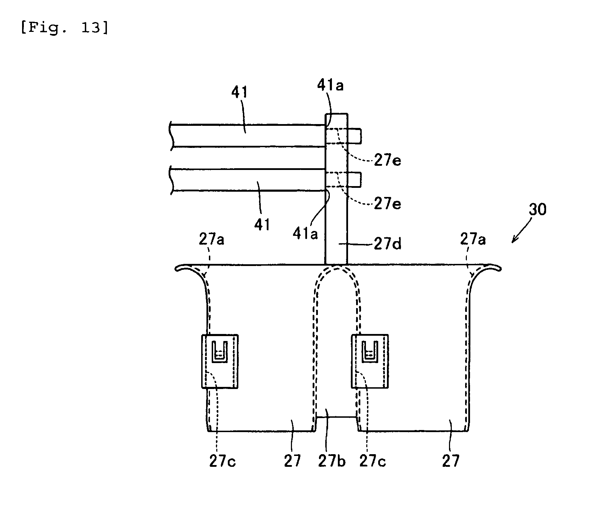

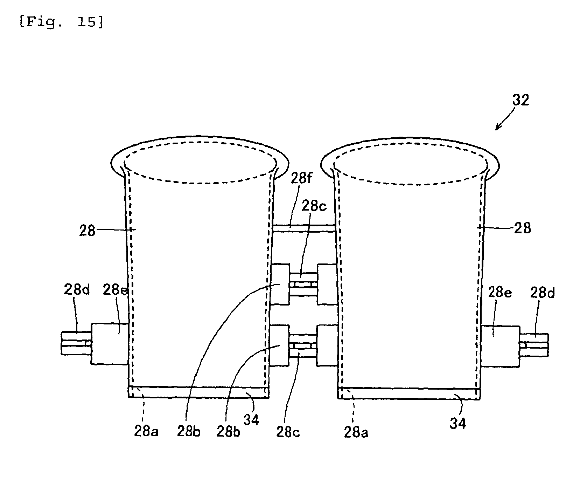

Fig. 1 is a side view of an overall structure of a motorcycle according to a first embodiment. Fig. 2 to Fig. 19 are figures that illustrate in more detail the structure of funnels of the motorcycle according to the first embodiment shown in Fig. 1. Note that, the first embodiment explains about a motorcycle that is one example of a vehicle of the present teaching. In the figures, the arrow FWD indicates a forward direction of the motorcycle in the direction that it runs. First, the structure of the motorcycle according to the first embodiment will be explained with reference to Fig. 1 to Fig. 19.

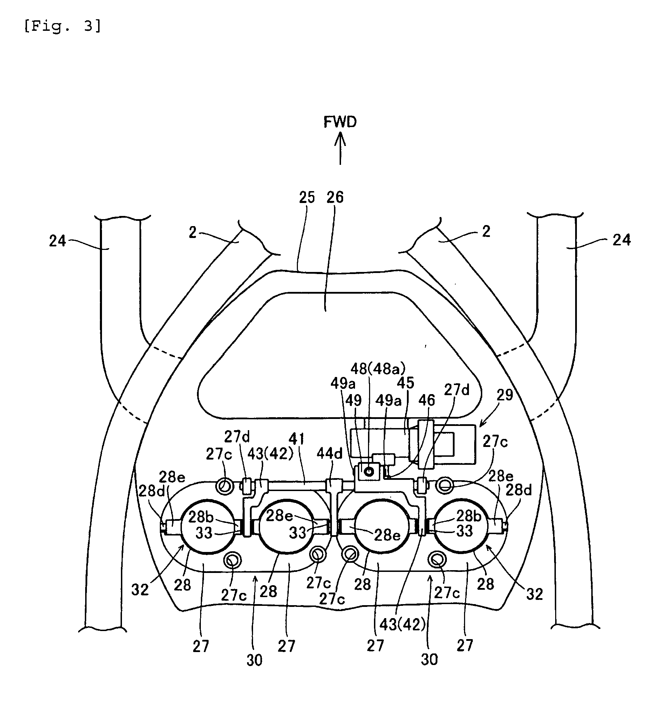

In the structure of the motorcycle according to the first embodiment, as shown by Fig. 1 and Fig. 2, a front end section of a main frame 2 is connected to a head pipe 1. The main frame 2, as can be seen from Fig. 3, is disposed such that it splits and extends to the left and right with respect to the forward direction of a vehicle body. In addition, as can be seen from Fig. 1 and Fig. 2, the main frame 2 is formed to extend downwards to the rear side. Further, a seat rail 3 that extends upward to the rear side is connected to the main frame 2. In addition, a steering mechanism 4 is turnably attached to the head pipe 1. A handle 5 is attached to the upward side of the steering mechanism 4, and a clutch lever 6 is attached to the handle 5. Further, a front fork 7 is attached to a downward side of the steering mechanism 4, and a front wheel 8 is rotatably mounted to a lower end section of the front fork 7.

In addition, a front end section of a swing arm 10 is attached via a pivot bearing 9 to a rear end section of the main frame 2. A rear wheel 11 is rotatably mounted to a rear end section of the swing arm 10. Further, a fuel tank 12 is disposed to the upward side of the main frame 2 so as to cover a rear side of a cleaner box 25, described hereinafter. In addition, a seat 13 is disposed to the upward side of the seat rail 3, and an engine 14 is mounted at the downward side of the main frame 2.

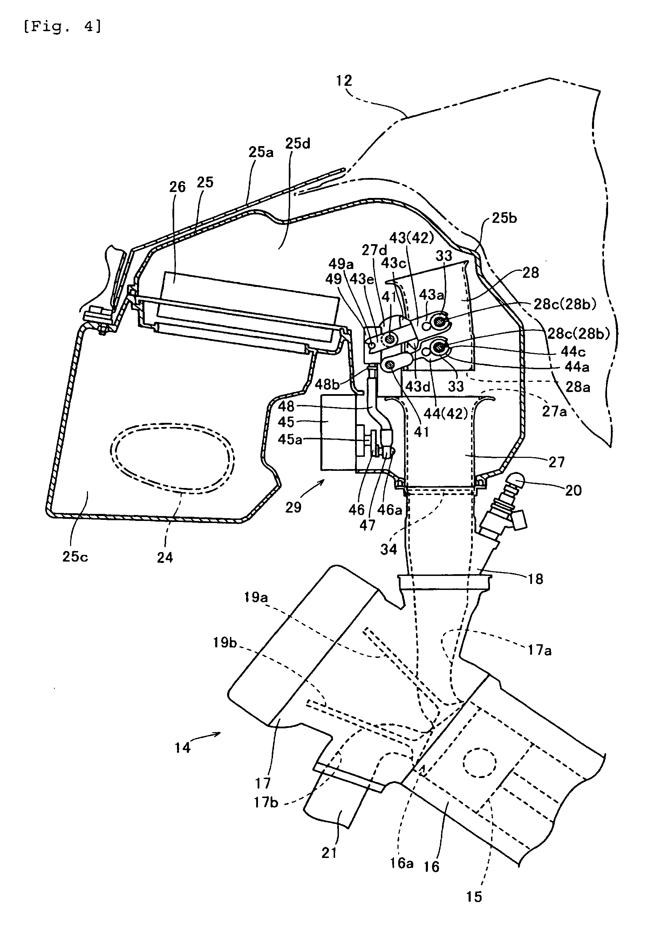

The engine 14, as shown in Fig. 4, includes a piston 15, a cylinder 16, a cylinder head 17, and a throttle body 18. The piston 15 is fitted inside the cylinder 16 and the cylinder head 17 is disposed so as to block the opening at one end of the cylinder 16. Further, an intake port 17a and an intake port 17b are formed in the cylinder head 17. The intake port 17a is provided to supply an air-fuel mixture including air and fuel to a combustion chamber 16a of the cylinder 16. Further, the intake port 17b is provided to exhaust residual gas remaining after combustion from the combustion chamber 16a of the cylinder 16. Moreover, an intake value 19a and an intake value 19b are respectively provided in the intake port 17a and the intake port 17b. The throttle body 18 is attached to an opening of the intake port 17a. Further, an injector 20 is attached to the throttle body 18 in order to inject fuel to the intake port 17a. In addition, an exhaust pipe 21 is attached to an opening of the intake port 17b. This exhaust pipe 21 is connected to a muffler 22 (refer to Fig. 1 and Fig. 2). Note that, although only one cylinder 16 is shown in Fig. 4, in reality four cylinders 16 are disposed at predetermined distances apart in the width direction of the vehicle. In other words, the engine 14 of the first embodiment of the invention is a 4-cylinder engine.

Further, as can be seen in Fig. 1 and Fig. 2, a front cowl 23 that includes an upper cowl 23a and a lower cowl 23b is provided so as to cover a front side of the vehicle body. Intake holes 23c are provided in a front side of the lower cowl 23b. Note that, Fig. 1 and Fig. 2 only show, with respect to the forward direction of the vehicle body, the left side intake hole 23c. However, in reality a pair of the intake holes 23c is provided in a left-right symmetrical manner with respect to the forward direction of the vehicle body. Further, air ducts 24 are connected to the intake holes 23c of the lower cowl 23b. In addition, as shown in Fig. 1 to Fig. 3, the cleaner box 25, which is supplied with air form the air ducts 24, is disposed between the main frame 2 that branches to the left and right.

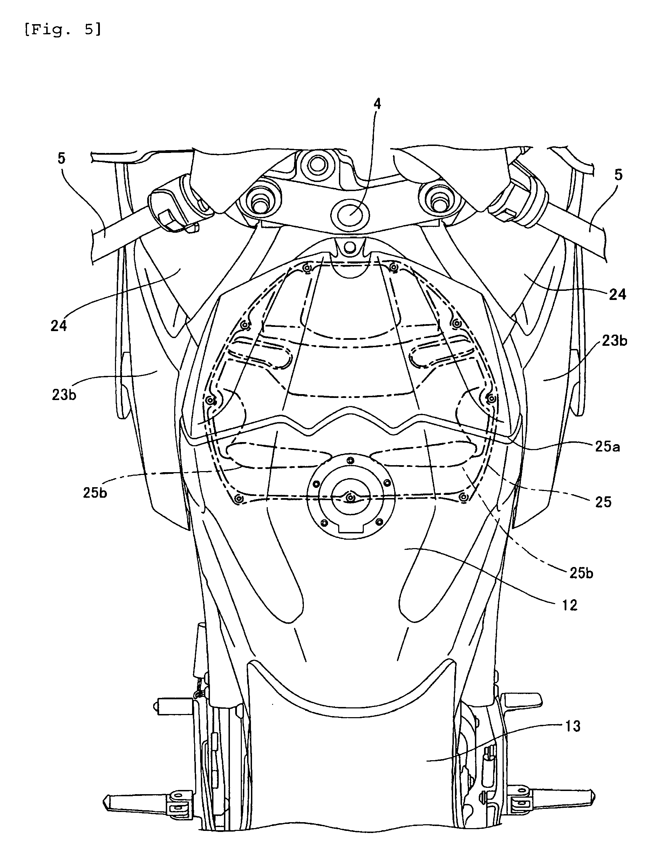

More specifically, as shown in Fig. 4, a cover 25a made of resin is positioned so as to cover an upper surface of a front section of the cleaner box 25. In addition, a rear section and a rear section upper surface of the cleaner box 25 are covered by the fuel tank 12. In addition, as shown in Fig. 4 and Fig. 5, a protrusion 25b is provided at the rear section of the cleaner box 25 and protrudes to the outside of the cleaner box 25. The protrusion 25b, as can be seen in Fig. 4, is provided so as to protrude to the outside at a region that corresponds to a rear section of an upper edge section of a moveable funnel 28, described hereinafter, such that the rear section of the upper edge section of the moveable funnel 28 does not come into contact with an inner surface of the cleaner box 25. As a result, as compared to when the entire rear section of the cleaner box 25 is made larger, it is possible to inhibit the volume of the fuel tank 12 from having to be made smaller. Further, as can be seen in Fig. 3 and Fig. 4, an air filter 26 for purifying the air supplied from the air ducts 24 is provided inside the cleaner box 25. Note that, the cleaner box 25 is just one example of a "case" of the present teaching, and the air filter 26 is just one example of an "air filter portion" of the present teaching.

Moreover, as shown in Fig. 3, Fig. 4 and Fig. 6, fixed funnels 27, moveable funnels 28, and a funnel moving mechanism 29 are provided inside the cleaner box 25. One each of the fixed funnel 27 and the moveable funnel 28 are provided for each cylinder 16 of the engine 14. Further, the fixed funnels 27 are fixed with respect to the cleaner box 25 and function to introduce purified air inside the cleaner box 25 to the intake ports 17a. In addition, the moveable funnels 28 are disposed on the intake side (the upstream side) of the fixed funnels 27, and function along with the fixed funnels 27 to introduce purified air inside the cleaner box 25 to the intake ports 17a.

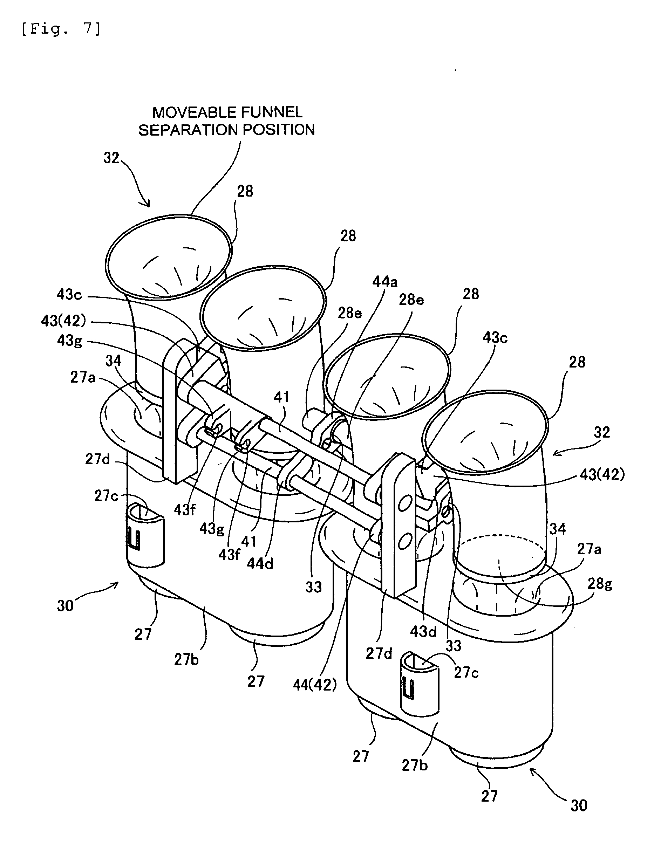

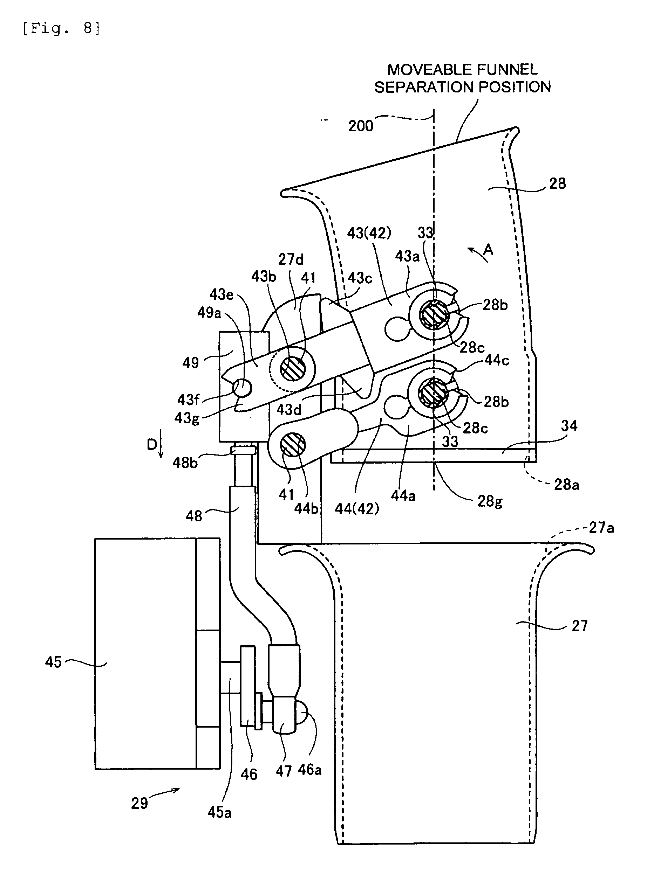

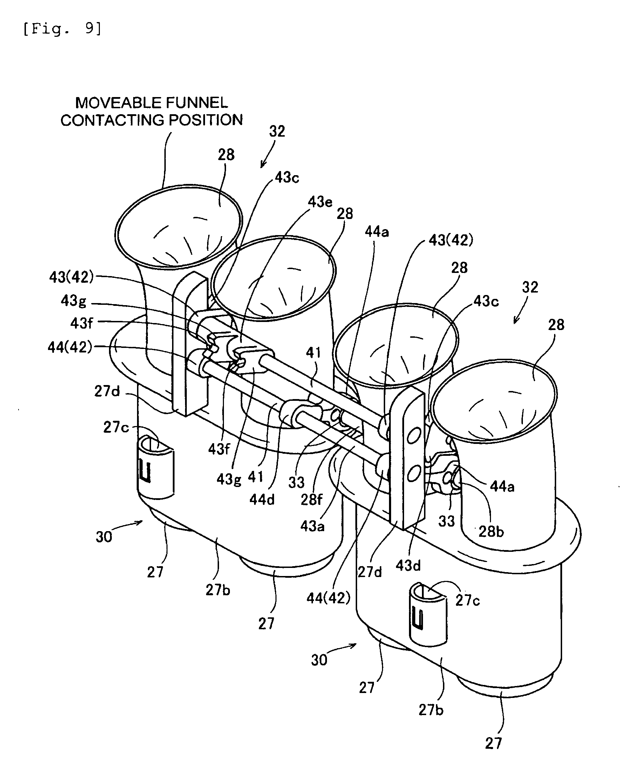

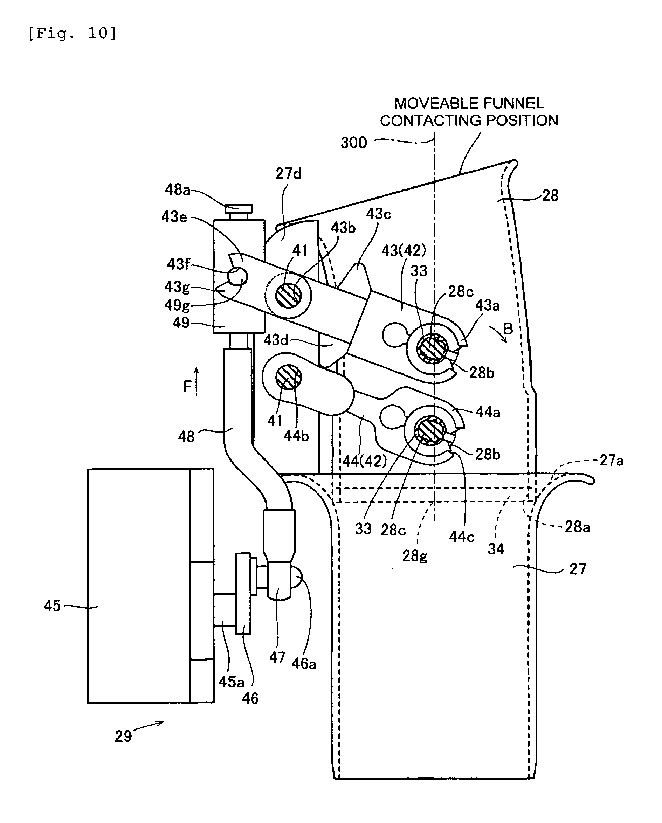

In addition, as shown in Fig. 7 to Fig. 10, each moveable funnel 28 is structured so as to be moveable between a separation position and a contacting position. The separation position (the state shown in Fig. 7 and Fig. 8) is a position at which an opening 28a of the moveable funnel 28 on the fixed funnel 27 side is separated away from an opening 27a on the intake side of the fixed funnel 27. The contacting position (the state shown in Fig. 9 and Fig. 10) is a position at which the opening 28a of the moveable funnel 28 is placed in contact with the opening 27a of the fixed funnel 27. Note that, as shown in Fig. 4, when the moveable funnel 28 is moved to the separation position (the state shown in Fig. 7 and Fig. 8), the intake pipe that connects from the cleaner box 25 to the cylinder 16 is structured by the fixed funnel 27, the throttle body 18, and the intake port 17a. On the other hand, when the moveable funnel 28 is moved to the contacting position (the state shown in Fig. 9 and Fig. 10), the intake pipe that connects from the cleaner box 25 to the cylinder 16 is structured by the moveable funnel 28, the fixed funnel 27, the throttle body 18 and the intake port 17a. Further, the funnel moving mechanism 29 functions to move the moveable funnels 28 between the separation position and the contacting position. Note that, the separation position and the contacting position are just examples of a "first position" and a "second position" of the present teaching.

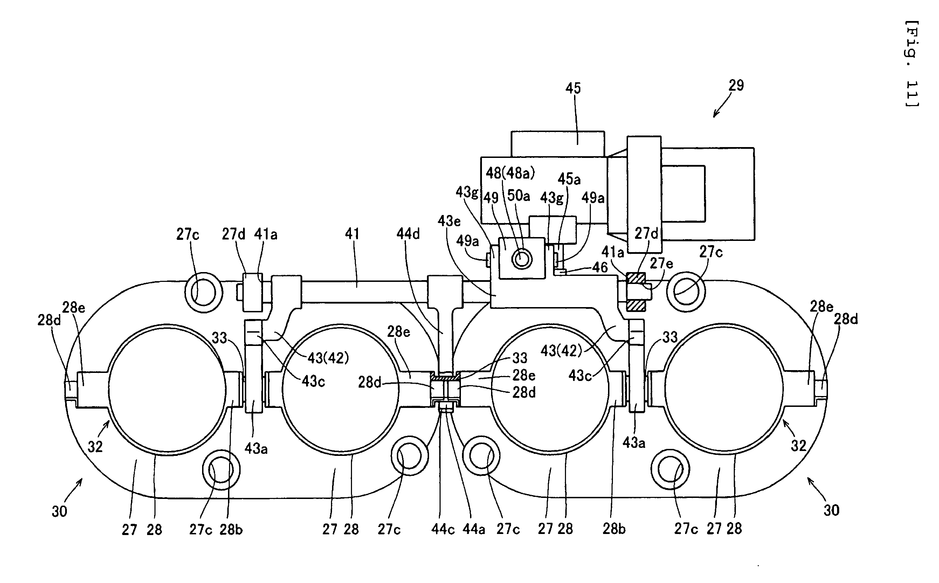

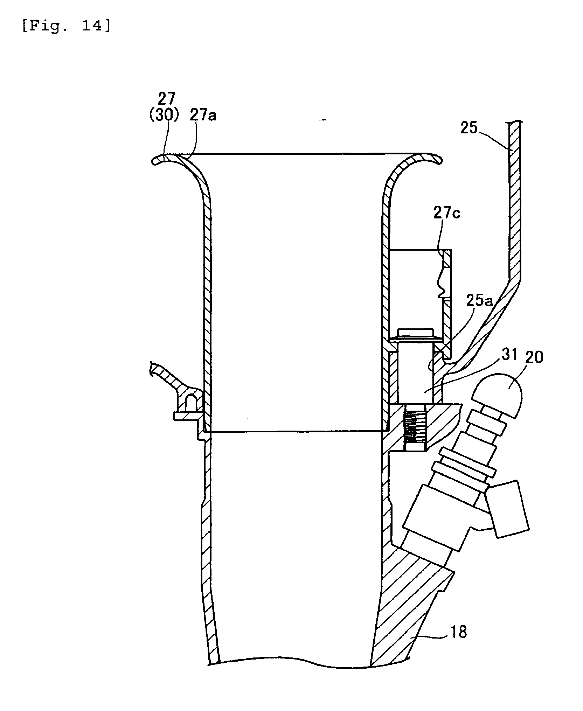

In addition, as can be seen from Fig. 11 to Fig. 13, the fixed funnels 27 are structured such that neighboring pairs of the fixed funnels 27 are integrally formed via a connecting section 27b. More specifically, the first embodiment of the invention includes two of a component 30 in which neighboring pairs of fixed funnels 27 are integrated. Further, three screw insertion holes 27c are respectively formed in each component 30 that integrates the pair of fixed funnels 27. Screws 31 (refer to Fig. 14) are inserted in the screw insertion holes 27c. In addition, as shown in Fig. 14, each fixed funnel 27 (the component 30) is attached to both the cleaner box 25 and the throttle body 18 by screwing the screws 31 into the screw insertion holes 27c. Note that, screw insertion holes 25a into which the screws 31 are inserted are provided in the cleaner box 25.

Further, as shown in Fig. 11 to Fig. 13, a strut 27d is integrally provided with the component 30 that integrates the pair of fixed funnels 27. A pair of turning shaft support holes 27e that turnably support an end section of turning shafts 41, described hereinafter, is formed in the strut 27d.

In addition, in the first embodiment, as shown in Fig. 11 to Fig. 15, the moveable funnels 28 have a structure in which neighboring pairs of moveable funnels 28 are formed integrally via a pair support shafts 28b. In other words, the first embodiment includes a pair of components 32 in which neighboring pairs of moveable funnels 28 are integrated. Further, the support shafts 28b are positioned between the pair of moveable funnels 28 of each component 32. Note that, as a result of the support shaft 28b being supported by parallel links 42, described hereinafter, the moveable funnels 28 (the component 32) are held in a moveable manner. Further, thin diameter sections 28c are formed in the support shafts 28b.

In addition, support shafts 28e having thin diameter sections 28d are provided at the outer side surface of the component 32 that integrates the neighboring pairs of moveable funnels 28. Further, a strengthening rib 28f is provided between the pair of moveable funnels 28 of the component 32. Moreover, as shown in Fig. 11, two of the component 32 that integrates the pair of moveable funnels 28 are positioned such that the end surfaces of the respective thin diameter sections 28d of the support shafts 28e face each other.

Further, in the first embodiment, referring to Fig. 11, a split bush 33 is mounted on each thin diameter section 28c of the support shaft 28b of the moveable funnels 28 (the component 32). This split bush 33 functions to allow turning of the parallel link 42 with respect to the support shaft 28b, described hereinafter. In addition, the split bush 33 is also mounted on the thin diameter sections 28d of the support shafts 28e positioned between the components 32 that integrate the pairs of moveable funnels 28. Note that, only one of the split bush 33 is positioned between the components 32 that integrate the pairs of moveable funnels 28. This split bush 33 is mounted so as to straddle between the thin diameter sections 28d of the pair of support shafts 28e.

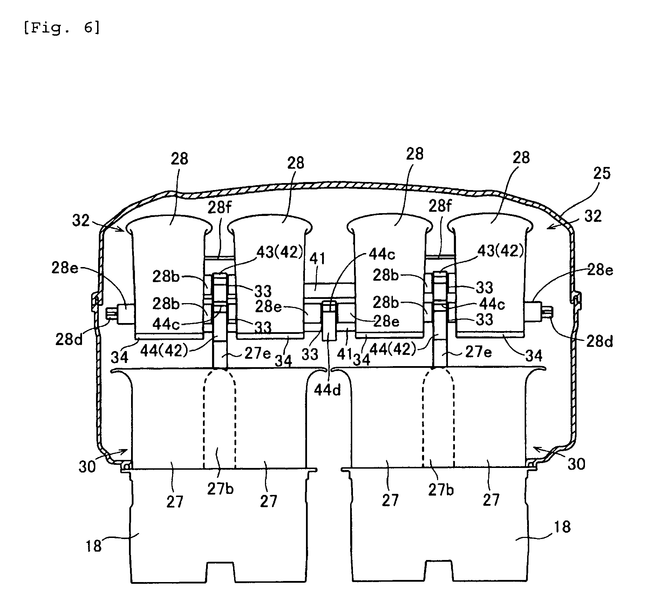

Further, referring to Fig. 6 to Fig. 8, a rubber lip 34 is mounted on the end section of each moveable funnel 28 on the fixed funnel 27 side. This rubber lip 34 functions to seal the gap between the moveable funnel 28 and the fixed funnel 27 when the moveable funnel 28 is moved to the contacting position (the state shown in Fig. 10).

Moreover, in the first embodiment, as shown in Fig. 8 to Fig. 10, the funnel moving mechanism 29 uses the parallel link 42 to move the moveable funnel 28 between the separation position (the state shown in Fig. 7 and Fig. 8) and the contacting position (the state shown in Fig. 9 and Fig. 10).

As can be seen from Fig. 11 to Fig. 13, the funnel moving mechanism 29 has a concrete structure in which the end sections of the turning shafts 41 are turnably supported in the turning shaft support holes 27e of the strut 27d provided on the fixed funnel 27 (the component 30). Further, stepped sections 41 a are provided in one end section and another end section of each turning shaft 41, and these stepped sections 41 a abut with respective opening end sections of the turning shaft support holes 27e of the strut 27d. As a result, movement in the axial direction of the turning shafts 41 is controlled.

Further, in the first embodiment, as can be seen in Fig. 11, the parallel links 42 are attached respectively to the one end section and the other end section sides of the turning shafts 41 so as to turn along with the turning shafts 41. Note that, the parallel links 42 are just one example of a "link mechanism" of the present teaching. The parallel links 42, as can be seen from Fig. 7 to Fig. 10, include an upper side link lever 43 attached to the turning shaft 41 at the upper side, and a lower side link lever 44 attached to the turning shaft 41 at the lower side. Note that, the upper side link lever 43 and the lower side link lever 44 are just examples of a "link lever" of the present teaching.

The upper side link lever 43, as shown in Fig. 8, has a fitting section 43a, a turning shaft insertion hole 43b, and a pair of stoppers 43c and 43d. As can be seen from Fig. 7 to Fig. 10, the support shaft 28b (the thin diameter section 28c) of the upper side of the moveable funnel 28 is fitted via the split bush 33 in the fitting section 43a of the upper side link lever 43. As a result, the upper side link lever 43 is turnable with respect to the upper side support shaft 28b. Further, as shown in Fig. 7 to Fig. 10, the upper side turning shaft 41 is fixed to the turning shaft insertion hole 43b of the upper side link lever 43 such that the upper side link lever 43 turns along with the upper side turning shaft 41. In addition, as shown in Fig. 8, the stopper 43c of the upper side link lever 43 functions to control turning of the upper side link lever 43 in direction A by abutting with the strut 27d of the fixed funnel 27 when the upper side link lever 43 has turned a determined amount in direction A. Further, as shown in Fig. 10, the stopper 43d of the upper side link lever 43 functions to control turning in direction B of the upper side link lever 43 by abutting with the strut 27d of the fixed funnel 27 when the upper side link lever 43 has turned a determined amount in direction B. Note that, the arrow showing direction A is just one example of a "first direction" of the present teaching and the arrow showing direction B is just one example of a "second direction" of the present teaching.

In addition, referring to Fig. 10 and Fig. 11, a support section 43e that is supported by a moving member 49, described hereinafter, is provided in the upper side link lever 43 that provides one of the supports for the moveable funnels 28 (the component 32). The support section 43e is structured by a pair of retaining tabs 43g in which respective notches 43f are formed, and is positioned at the opposite side to the fitting section 43a. Note that, the support section 43e, described above, is not provided in the lower side link lever 44 that provides the other support for the moveable funnels 28 (the component 32).

In addition, the lower side link lever 44, as can be seen from Fig. 8 to Fig. 10, has a fitting section 44a and a turning shaft insertion hole 44b. The lower side support shaft 28b (the thin diameter section 28c) of the moveable funnel 28 is fitted to the fitting section 44a of the lower side link lever 44 via the split bush 33. As a result, the lower side link lever 44 is turnable with respect to the lower side support shaft 28b. Further, the lower side turning shaft 41 is fixed in the turning shaft insertion hole 44b of the lower side link lever 44 such that the lower side link lever 44 turns along with the lower side turning shaft 41. Note that, as shown in Fig. 11, a link lever 44d having a fitting section 44a, and a turning shaft insertion hole 44b like the lower side link lever 44, and a split section 44c is positioned between the components 32 that integrate the pairs of moveable funnels 28.

As a result of giving the parallel links 42 the structure described above, as can be seen in Fig. 8, when the parallel links 42 turn in direction A, each moveable funnel 28 moves in the direction away from the fixed funnel 27. Further, as shown in Fig. 10, when the parallel links 42 turn in direction B, each moveable funnel 28 moves in the direction toward the fixed funnel 27. Note that, as shown in Fig. 8 and Fig. 10, the turning amount of the parallel links 42 is adjusted such that the position of an opening surface 28g (refer to Fig. 7, Fig. 8 and Fig. 10) of the moveable funnel 28 on the side of the opening 27a of the fixed funnel 27 in the separation position (the state of Fig. 8), and the position of the opening surface 28g (refer to Fig. 7, Fig. 8 and Fig. 10) of the moveable funnel 28 on the side of the opening 27a of the fixed funnel 27 in the contacting position (the state of Fig. 10) are the same when viewed from the opening direction of the fixed funnel 27. More specifically, as can be seen from Fig. 8 and Fig. 10, adjustment is performed such that a central axis 200 of the opening surface 28g of the moveable funnel 28 in the separation position (the state shown in Fig. 8) and a central axis 300 of the opening surface 28g of the moveable funnel 28 in the contacting position (the state shown in Fig. 10) are aligned. In addition, the turning amount of the parallel links 42 is adjusted such that the position of the upper side support shaft 28b in the separation position (the state shown in Fig. 8) when viewed from the opening direction of the fixed funnel 27, and the position of the upper side support shaft 28b in the contacting position (the state shown in Fig. 10) when viewed from the opening direction of the fixed funnel 27 are the same. Further, the turning amount of the parallel links 42 is adjusted such that the position of the lower side support shaft 28b in the separation position (the state shown in Fig. 8) when viewed from the opening direction of the fixed funnel 27, and the position of the lower side support shaft 28b in the contacting position (the state shown in Fig. 10) when viewed from the opening direction of the fixed funnel 27 are the same. In addition, the turning amount of the parallel links 42 is adjusted such that the position of the upper side support shaft 28b in the separation position (the state shown in Fig. 8) when viewed from the opening direction of the fixed funnel 27, and the position of the lower side support shaft 28b in the separation position (the state shown in Fig. 8) when viewed from the opening direction of the fixed funnel 27 are the same. Further, the turning amount of the parallel links 42 is adjusted such that the that the position of the upper side support shaft 28b in the contacting position (the state shown in Fig. 10) when viewed from the opening direction of the fixed funnel 27, and the position of the lower side support shaft 28b in the contacting position (the state shown in Fig. 10) when viewed from the opening direction of the fixed funnel 27 are the same.

Moreover, as shown in Fig. 8, the stopper 43c of the parallel link 42 (the upper side link lever 43) is adjusted so as to abut with the strut 27d when the moveable funnel 28 reaches the separation position. Further, as shown in Fig. 10, the stopper 43d of the parallel link 42 (the upper side link lever 43) is adjusted so as to abut with the strut 27d when the moveable funnel 28 reaches the contacting position.

In addition, in the first embodiment, as shown in Fig. 8 and Fig. 11, each parallel link 42 including the upper side link lever 43 and the lower side link lever 44 is caused to turn by driving force of a motor 45. More concretely, an output shaft 45a of the motor 45 is attached to one end section of a turning lever 46. Note that, the motor 45 is just one example of a "drive source" of the present teaching, and the output shaft 45a is just one example of a "drive shaft" and a "motor drive shaft" of the present teaching. Further, as can be seen in Fig. 4, the motor 45 is located at a position that is between an upstream side section 25c that is an upstream section of the flow of air from the air filter 26 disposed inside the cleaner box 25, and a downstream side section 25d that is a downstream section of the flow of air from the air filter 26. Further, the motor 45 is provided at the outer side of the cleaner box 25. More specifically, the cleaner box 25 is provided with a U-shape, and provided with the upstream side section 25c to the upstream of the air filter 26 and the downstream side section 25d to the downstream of the air filter 26 that face each other. Further, the motor 45 is positioned between the upstream side section 25c to the upstream of the air filter 26 and the downstream side section 25d to the downstream of the air filter 26 that face each other.

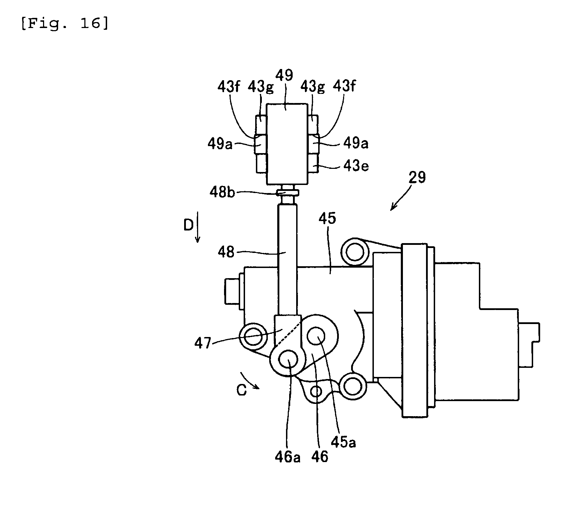

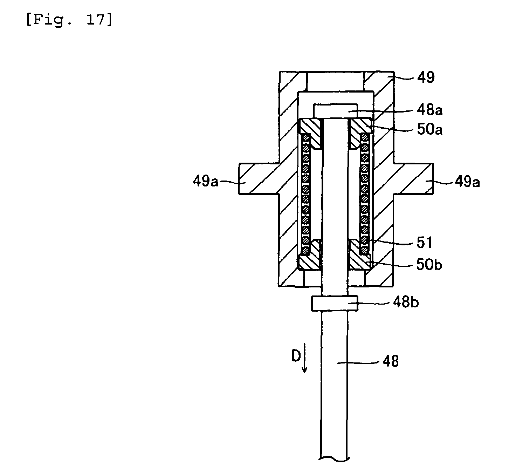

Moreover, as can be seen in Fig. 8 and Fig. 11, a generally spherical support member 46a is provided on the other end section of the turning lever 46. A connecting member 47 is attached to the spherical support member 46a of the turning lever 46 such that the connecting member 47 is capable of rocking with respect to the support member 46a. Further, a moving shaft 48 is attached to the connecting member 47. As can be seen in Fig. 17, an upper side pressing member 48a and a lower side pressing member 48b are provided on the moving shaft 48. Note that, the moving shaft 48 is just one example of a "connecting lever" of the present teaching. The upper side pressing member 48a is positioned at the end section of the moving shaft 48 at the opposite side from the connecting member 47 (refer to Fig. 16). Further, the lower side pressing member 48b is positioned in a region that is a predetermined distance of separation in the downward direction from the upper side pressing member 48a of the moving shaft 48.

In addition, a moving member 49 is positioned at the side of the one end section of the moving shaft 48 where the upper side pressing member 48a (the lower side pressing member 48b) is provided. Both side surfaces of this moving member 49, as can be seen in Fig. 16, are provided with protrusions 49a that engage with the pair of notches 43f formed in the upper side link lever 43. Further, the retaining tabs 43g of the upper side link lever 43 are positioned so as to sandwich the moving member 49, and the notches 43f are engaged with the protrusions 49a. As a result, the upper side link lever 43 (the support section 43e) is supported by the moving member 49. Moreover, as shown in Fig. 17, bushes 50a and 50b for slidably supporting the moving shaft 48 are provided inside the moving member 49. The bushes 50a and 50b are disposed between the upper side pressing member 48a and the lower side pressing member 48b. Further, a compression spring 51 is attached between the bush 50a and the bush 50b inside the moving member 49.

Further, when the turning lever 46 is turned in direction C by the driving force of the motor 45 (the state shown in Fig. 16), as shown in Fig. 17, the compression spring 51 generates energizing force in direction D as a result of movement of the moving shaft 48 in direction D. As a result, the moving member 49 is energized in direction D by the compression spring 51. Accordingly, as can be seen in Fig. 8, the energizing force of the compression spring 51 (refer to Fig. 17), is transmitted to the parallel link 42 via the moving member 49, whereby the parallel link 42 is turned in direction A. Further, when the stopper 43c of the parallel link 42 abuts with the strut 27d as well, the energizing force of the compression spring 51 (refer to Fig. 17) is transmitted via the moving member 49 to the parallel link 42 such that the parallel link 42 turns in direction A.

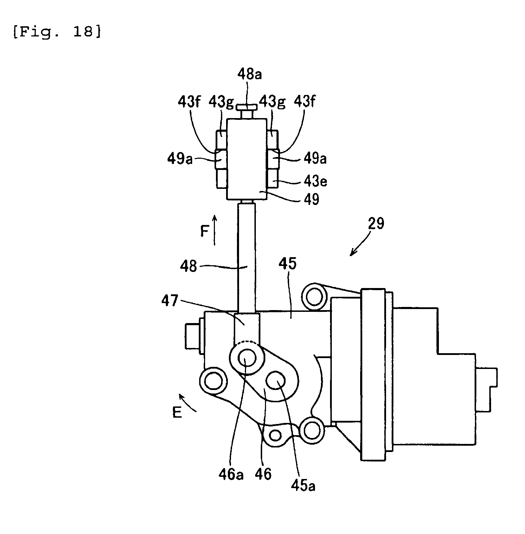

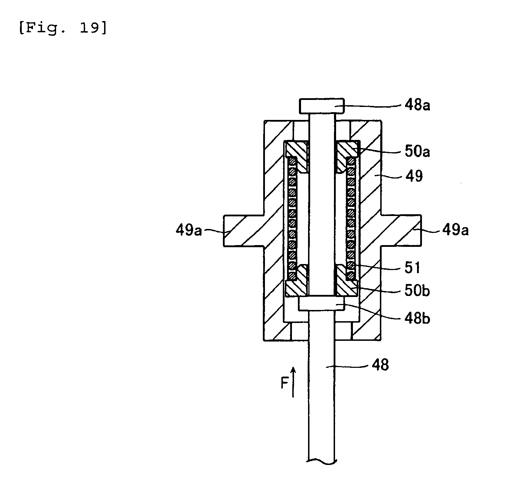

On the other hand, when the turning lever 46 is turned in direction E by the driving force of the motor 45 (the state shown in Fig. 18), the compression spring 51 generates energizing force in direction F as a result of movement of the moving shaft 48 in direction F, as shown in Fig. 19. As a result, the moving member 49 is energized in direction F by the compression spring 51. Accordingly, as can be seen in Fig. 10, the energizing force of the compression spring 51 (refer to Fig. 19), is transmitted to the parallel link 42 via the moving member 49, whereby the parallel link 42 is turned in direction B. Further, when the stopper 43d of the parallel link 42 abuts with the strut 27d as well, the energizing force of the compression spring 51 (refer to Fig. 19) is transmitted via the moving member 49 to the parallel link 42 such that the parallel link 42 turns in direction B.

Next, an operation that is performed when the length of the intake pipe that connects between the cleaner box 25 and the cylinder 16 is changed will be explained with reference to Fig. 4, Fig. 8, Fig. 10, and Fig. 16 to Fig. 19.

When the engine 14 shown in Fig. 4 is rotating at high speed, the intake pipe is made shorter to more easily obtain a pulsation effect. In other words, when the engine 14 is rotating at high speed, the moveable funnel 28 is moved to the separation position.

More particularly, first, as shown in Fig. 16, the turning lever 46 is turned in direction C by the motor 45 of the funnel moving mechanism 29. Accordingly, the moving shaft 48 is moved in direction D. As a result, as shown in Fig. 7, the compression spring 51 (refer to Fig. 17) generates energizing force in direction D, whereby the moving member 49 is moved in direction D. Thus, the parallel link 42 is turned in direction A. Following this, the parallel link 42 continues turning in direction A until the stopper 43c of the upper side link lever 43 abuts with the strut 27d.

As a result, the moveable funnel 28 is moved to the separation position at which the opening surface of the opening 28a of the moveable funnel 28 is held parallel with respect to the opening surface of the opening 27a of the fixed funnel 27. Accordingly, when the engine 14 (refer to Fig. 4) is rotating at high speed, the fixed funnel 27, the throttle body 18 (refer to Fig. 4), and the intake port 17a (refer to Fig. 4) structure the intake pipe. As a result the intake pipe is shortened. Note that, when the engine 14 shown in Fig. 4 is rotating at high speed and the intake pipe is shortened, high pressure-pressure waves can more easily reach the opening at the cylinder 16 side of the intake port 17a when the intake valve 19a is open, whereby intake efficiency is improved.

Note that, as shown in Fig. 8, when the moveable funnel 28 reaches the separation position, the position of the opening surface of the moveable funnel 28 on the side of the opening 27a of the fixed funnel 27, when viewed from the opening direction of the fixed funnel 27, is the same as the position of the opening surface of the moveable funnel 28 on the side of the opening 27a of the fixed funnel 27 in the contacting position (the state of Fig. 10). Further, when the moveable funnel 28 reaches the separation position, the energizing force of the compression spring 51 (refer to Fig. 17) is transmitted to the parallel link 42 via the moving member 49 such that the parallel link 42 is turned in direction A.

Next, in order to make it easier to obtain a pulsation effect when the engine 14 shown in Fig. 4 is rotating at low speed, the intake pipe is lengthened. In other words, when the engine 14 is rotating at low speed, the moveable funnel 28 is moved to the contacting position.

More specifically, first, as shown in Fig. 18, the turning lever 46 is turned in direction E by the motor 45 of the funnel moving mechanism 29. Accordingly, the moving shaft 48 is moved in direction F. As a result, as shown in Fig. 10, the compression spring 51 (refer to Fig. 19) generates energizing force in direction F, whereby the moving member 49 is moved in direction F. Thus, the parallel link 42 is turned in direction B. Following this, the parallel link 42 continues turning in direction B until the stopper 43d of the upper side link lever 43 abuts with the strut 27d.

As a result, the moveable funnel 28 is moved to the contacting position at which the opening surface of the opening 28a of the moveable funnel 28 is held parallel with respect to the opening surface of the opening 27a of the fixed funnel 27. Accordingly, when the engine 14 (refer to Fig. 4) is rotating at low speed, the moveable funnel 28, the fixed funnel 27, the throttle body 18 (refer to Fig. 4), and the intake port 17a (refer to Fig. 4) structure the intake pipe. As a result the intake pipe is lengthened. Note that, when the engine 14 shown in Fig. 4 is rotating at low speed and the intake pipe is lengthened, high pressure-pressure waves can more easily reach the opening at the cylinder 16 side of the intake port 17a when the intake valve 19a is open, whereby intake efficiency is improved.

Note that, as shown in Fig. 10, when the moveable funnel 28 reaches the contacting position, the energizing force of the compression spring 51 (refer to Fig. 19) is transmitted to the parallel link 42 via the moving member 49 such that the parallel link 42 is turned in direction B.

In the first embodiment, the motor 45 that provides drive via the drive shaft 45a in order to move the moveable funnel 28 is disposed, with respect to the moveable funnel 28, at the opposite side to the fuel tank 12 that is disposed to the rear direction side in the running direction of the motorcycle (the direction of the FWD arrow) from the moveable funnel 28. As a result, space for disposing the motor 45 etc. that moves the moveable funnel 28 does not need to be provided at the fuel tank 12 side, and this space can be used for disposing the fuel tank 12. As a result, the volume of the fuel tank 12, which is disposed to the rear of the moveable funnel 28 used to vary air intake, is inhibited from being reduced.

Moreover, in the first embodiment, the parallel link 42, the upper side link lever 43, the lower side link lever 44 and the like are provided inside the cleaner box 25, and the motor 45 is provided outside the cleaner box 25. As a result, it is no longer necessary to arrange electrical wiring or the like for driving the motor 45 inside the cleaner box 25, which vaporized gasoline coming from the direction of the engine 14 enters. Accordingly, it is possible to inhibit deterioration of the electrical wiring caused by vaporized gasoline that has entered into the cleaner box 25.

Furthermore, in the first embodiment, the motor 45 is positioned between the upstream side section 25c that is the upstream section of the flow of air from the air filter 26 disposed inside the cleaner box 25, and the downstream side section 25d that is the downstream section from the air filter 26. Further, the motor 45 is provided at the outer side of the cleaner box 25. As a result, it is easily possible to ensure space for disposing the motor 45.

Further, the first embodiment is structured such that one end side of the turning lever 46 is connected to the output shaft 45a in order to cover rotational motion of the output shaft 45a to linear motion. Accordingly, the turning lever 46 is able to cover the rotational motion of the output shaft 45a to the linear motion required by the moveable funnels 28.

Moreover, the first embodiment is also provided with the moving shaft 48 that connects the other end side of the turning lever 46 and the upper side link lever 43 via the moving member 49. As a result, the linear motion converted by the turning lever 46 can easily be transmitted to the upper side link lever 43 via the moving shaft 48.

Moreover, as described above, each parallel link 42 is used to move the moveable funnel 28. Accordingly, the opening 27a of the moveable funnel 28 on the fixed funnel 27 side can be separated away from and brought into contact with respect to the opening 27a of the intake side of the fixed funnel 27, while the opening 28a of the moveable funnel 28 on the fixed funnel 27 side is held parallel with respect to the opening surface 27a of the fixed funnel 27 on the intake side. As a result, even if the opening 28a of the moveable funnel 28 on the fixed funnel 27 side is separated away from the opening 27a of the fixed funnel 27 on the intake side, air that enters through the fixed funnel 27 having passed through the moveable funnel 28 is able to flow linearly. Accordingly, it is possible to inhibit flow resistance of the air from increasing. As a result, when the moveable funnel 28 is separated away from the fixed funnel 27, reduction of intake efficiency can be inhibited from occurring.

Further, in the first embodiment, the turning amount of each parallel link 42 is adjusted such the position of the opening surface 28g of the moveable funnel 28 on the side of the opening 27a of the fixed funnel 27 in the separation position, and the position of the opening surface 28g of the moveable funnel 28 on the side of the opening 27a of the fixed funnel 27 in the contacting position are the same when viewed from the opening direction of the fixed funnel 27. As a result, when the moveable funnel 28 is moved from the contacting position to the separation position (in the case that the engine 14 is rotating at high speed), all of the air that enters through the fixed funnel 27 having passed through the moveable funnel 28 is able to flow in a substantially linear manner. Accordingly, it is possible to inhibit flow resistance of the air from increasing.

### (Second Embodiment)

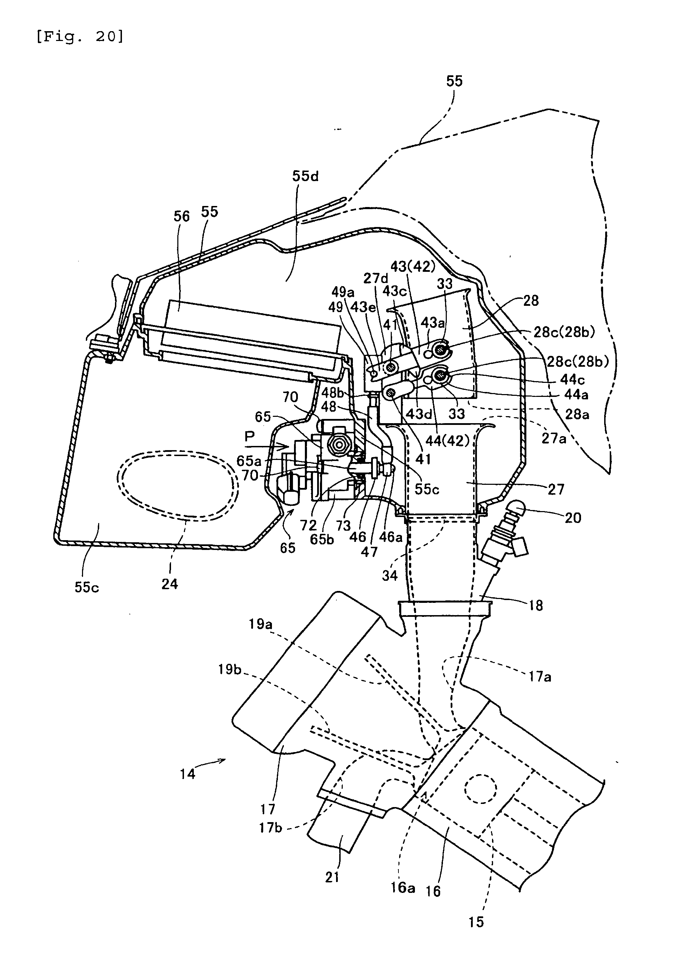

Fig. 20 to Fig. 23 are figures that illustrate in detail the structure of the periphery area of the funnels of the motorcycle according to a second embodiment. Fig. 20 to Fig. 23 will be used to explain the example of the second embodiment in which, unlike the above-described first embodiment, a motor 65 that is disposed to the outer side of a cleaner box 55 is attached to the cleaner box 55 in a sealed manner.

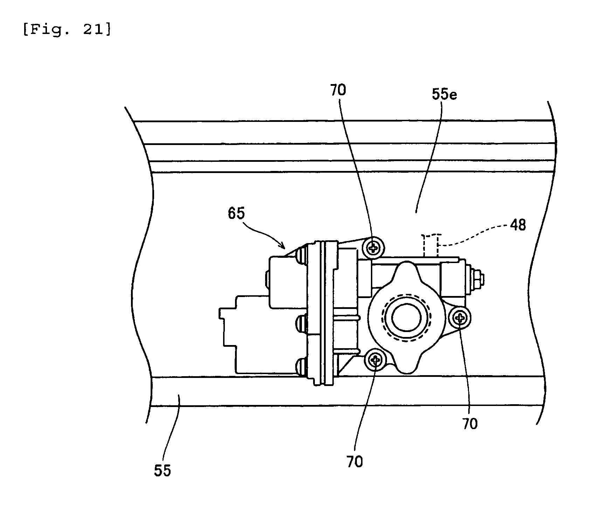

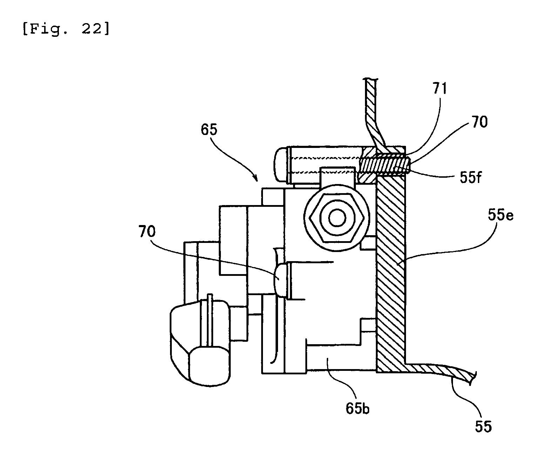

In the second embodiment, as shown in Fig. 20, the motor 65 is located at a position that is between an upstream side section 55c that is an upstream section of the flow of air from an air filter 56 disposed inside the cleaner box 55 made of resin, and a downstream side section 55d that is a downstream section of the flow of air from the air filter 56. Further, the motor 65 is provided at the outer side of the cleaner box 55. More specifically, the cleaner box 55 is provided with a U-shape, and provided with the upstream side section 55c to the upstream of the air filter 56 and the downstream side section 55d to the downstream of the air filter 56 that face each other. Further, the motor 65 is positioned between the upstream side section 25c to the upstream of the air filter 56 and the downstream side section 25d to the downstream of the air filter 56 that face each other. Note that, the motor 65 is just one example of a "drive source" of the present teaching. Further, the motor 65, as can be seen in Fig. 20 and Fig. 21, is attached by insertion of three screws 70 into screw holes 55f provided in a wall 55e of the cleaner box 55. The screw holes 55f, as shown in Fig. 22, are respectively formed in areas that correspond with the attachment positions of the screws 70 by embedding metal-made screw hole components 71 in the wall 55e of the resin-made cleaner box 55. Note that, the cleaner box 55 is just one example of a "case" of the present teaching, and the air filter 56 is just one example of an "air filter portion" of the present teaching.

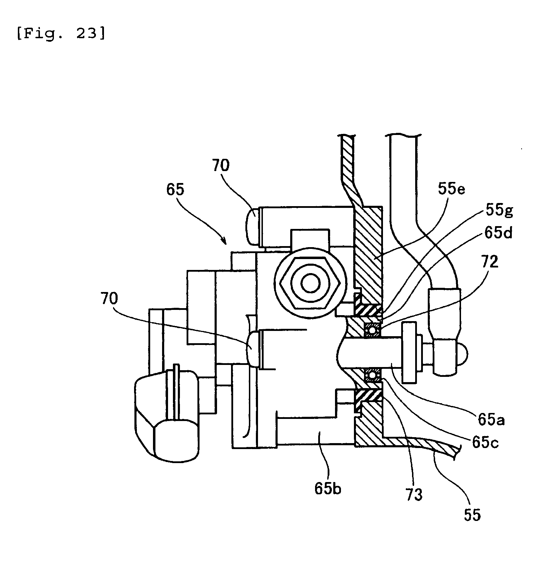

In addition, in the second embodiment, the motor 65 includes an output shaft 65a and a motor body 65b. As can be seen from Fig. 23, a bearing accommodating section 65c that has a recess-like shape is provided integrally with the motor body 65b around the output shaft 65a in the motor body 65b. Further, a seal bearing 72 that functions as a seal is pressed fitted in the bearing accommodating section 65c, and the output shaft 65a is inserted inside the seal bearing 72. As a result, it is possible to inhibit exit and entry of air to the cleaner box 55 from the area around the output shaft 65a of the motor 65. Note that, the seal bearing 72 is just one example of a "bearing having a seal function" of the present teaching. In addition, a ring-shaped protrusion 65d is provided integrally with the motor body 65b in an attachment section of the motor 65 for attachment to the cleaner box 55. A grommet 73 made of rubber is mounted around the outer periphery surface of the protrusion 65d. Note that, the grommet 73 is just one example of an "elastic member" of the present teaching. Further, the protrusion 65d to which the grommet 73 is mounted is fitted in a hole 55g provided in the wall 55e of the cleaner box 55. More specifically, the protrusion 65d of the motor 65 is fitted in the hole 55g of the cleaner box 55 such that the grommet 73 seals therebetween. Accordingly, it is possible to inhibit exit and entry of air from/to the inside of the cleaner box 55 from the gap between the motor 65 and the cleaner box 55.

Note that, the other structural features and the operation of the second embodiment are the same as the structural features and the operation of the first embodiment.

In the second embodiment, as described above, the seal bearing 72 is fitted to a bearing groove 65b of the motor 65 including the output shaft 65a that extends from the outside to the inside of the cleaner box 55. Further, the rubber-made grommet 73 is fitted around the protrusion 65c provided integrally with the body of the motor 65, and the protrusion 65c fitted with the grommet 73 is fitted into the hole 55g of the cleaner box 55. As a result of adopting this structure, flow of air is inhibited in the gap between the output shaft 65a and the hole 55g of the cleaner box 55. As a result, it is possible to inhibit the occurrence of interference of the flow of air that enters the engine 14 in the inside of the cleaner box 55.

Note that, the other effects of the second embodiment are the same as the effects of the first embodiment described-above.

Note that, it is to be understood that all of the features of the embodiments disclosed here are merely examples, and in no way limit the present teaching.

For example, in the examples of the above embodiments the present teaching is applied to a motorcycle. However, the present teaching is not limited to this structure, and may be applied to vehicles other than a motorcycle.

Furthermore, in the above embodiments, the present teaching is applied to a vehicle equipped with a 4-cylinder engine. However, the present teaching is not limited to this structure, and may be applied to a vehicle equipped with a multi-cylinder engine that is different to a 4-cyliner engine, or applied to a vehicle equipped with a single cylinder engine.

Moreover, in the above embodiments, pairs of the moveable funnels are integrated. However, the present teaching is not limited to this structure and three or more of the moveable funnels may be integrated. Further, a separate moveable funnel may be provided for each cylinder.

In addition, the above embodiments have a structure in which the moveable funnels are moved by the parallel links (the link mechanism) having the plurality of the link levers. However, the present teaching is not limited to this structure and a link mechanism having a single arm (lever) may be used to move the moveable funnels.

The description above discloses (amongst others) a first embodiment which includes: an engine having an intake port; a fixed funnel that introduces air to the intake port of the engine; a moveable funnel that is moveably disposed on the intake side of the fixed funnel and that introduces air to the intake port of the engine along with the fixed funnel; a link mechanism that moveably supports the moveable funnel; a fuel tank disposed to the rear side of the moveable funnel when the vehicle is viewed from a side thereof; and a drive source that drives the link mechanism in order to move the moveable funnel, the drive source being disposed, if the moveable funnel is taken as a reference point, to the opposite side from the side where the fuel tank is disposed.

As described above, in the vehicle according to the first embodiment, the drive source, which drives the link mechanism in order to move the moveable funnel, is disposed, with respect to the moveable funnel, to the opposite side from the side where the fuel tank is disposed, the fuel tank being disposed to the rear side of the moveable funnel when the vehicle is viewed from the side thereof. As a result of adopting this structure, space for disposing the drive source that moves the moveable funnel does not need to be provided at the fuel tank side, and this space can be used for disposing the fuel tank. As a result, the volume of the fuel tank, which is disposed to the rear of the moveable funnel used to vary air intake, is inhibited from being reduced.

The vehicle according to the first embodiment described above preferably includes a case in which the fixed funnel and the moveable funnel are disposed. Further, preferably, the link mechanism is disposed inside the case, and the drive source is disposed to the outside of the case. As a result of adopting this structure, it is no longer necessary to arrange electrical wiring or the like for driving the drive source inside the case, which vaporized gasoline coming from the direction of the engine enters. Accordingly, it is possible to inhibit deterioration of the electrical wiring caused by vaporized gasoline that has entered into the case.

In the above-described vehicle including the case accommodating the fixed funnel and the moveable funnel, it is preferable that an air filter portion is provided inside the case, and that the drive source is positioned between an upstream side section and a downstream side section of the case, the upstream side section and the downstream side section being respectively upstream and downstream from the air filter portion. If this structure is adopted, it is easily possible to ensure space for disposing the drive source.

In the above-described vehicle including the case accommodating the fixed funnel and the moveable funnel, it is preferable that the drive source includes a drive shaft that extends from the outside to the inside of the case, and that the vehicle further includes a seal member that seals a gap between the drive shaft and the case. If this structure is adopted, air inside the case is inhibited from leaking to the outside of the case through the gap between the drive shaft and the case. As a result, it is possible to inhibit the occurrence of interference of the flow of air that enters the engine in the inside of the case.

In the vehicle described above in which the drive source includes the drive shaft extending from the outside to the inside of the case, it is preferable that the seal member includes a bearing having a seal function, and that the bearing rotatably supports the drive shaft of the drive source. If this structure is adopted, the bearing having the seal function is able to simply seal the surrounding of the drive shaft.

In the vehicle described above in which the drive source includes the drive shaft extending from the outside to the inside of the case, it is preferable that the seal member includes an elastic member disposed in the gap between the drive shaft of the drive source and the case. If this structure is adopted, it is easily possible to seal the gap between the drive shaft and the case.

In the vehicle described above including the case that accommodates the fixed funnel and the moveable funnel, it is preferable that the drive source includes a motor, the motor includes a motor drive shaft that extends from the outside to the inside of the case, and the vehicle further includes a turning lever that has one end side connected to the motor drive shaft, and that converts rotational motion of the motor drive shaft to linear motion. If this structure is adopted, the turning lever can be used to convert the rotational motion of the motor drive shaft to linear motion necessary for the moveable funnel.

The above structure preferably includes a connecting lever that connects the other end side of the turning lever to the link mechanism. If this structure is adopted, the linear motion converted by the turning lever can be easily transmitted to the link mechanism via the connecting lever.

In the vehicle of the first embodiment described above, it is preferable that the link mechanism includes a parallel link that has a plurality of link levers that moveably support the moveable funnel such that it is capable of parallel movement. If this structure is adopted, the parallel link is used to move the moveable funnel. As a result, the opening of the moveable funnel on the fixed funnel side can be separated away from and brought into contact with respect to the opening of the fixed funnel on the intake side, while the opening surface of the moveable funnel on the fixed funnel side is held parallel with respect to the opening surface of the fixed funnel on the intake side. As a result, even if the opening of the moveable funnel on the fixed funnel side is separated away from the opening of the fixed funnel on the intake side, air that enters through the fixed funnel having passed through the moveable funnel is able to flow linearly. Accordingly, it is possible to inhibit flow resistance of the air from increasing. As a result, when the moveable funnel is separated away from the fixed funnel, reduction of intake efficiency can be inhibited from occurring.

In the vehicle described above including the connecting lever that connects between the other end side of the turning lever and the link mechanism, it is preferable that the link mechanism includes a parallel link that has a plurality of link levers that moveably support the moveable funnel such that it is capable of parallel movement; and that, among the link levers, at least one of the link levers has one end that is connected to the connecting lever and has another end that is connected to the moveable funnel. If this structure is adopted, the driving force of the drive source can be easily transmitted to the moveable funnel while the opening surface of the moveable funnel on the fixed funnel side is held parallel with the opening surface of the fixed funnel on the intake side.

In the vehicle including the parallel link having the plurality of link levers that moveably support the moveable funnel such that it is capable of parallel movement, it is preferable that: in the case that the engine is rotating at high speed, the link levers turn in one direction to move an opening of the moveable funnel on the fixed funnel side to a first position at which the opening is away from an opening on the intake side of the fixed funnel; and in the case that the engine is rotating at low speed, the link levers turn in a second direction that is opposite to the first direction to move the opening of the moveable funnel on the fixed funnel side to a second position at which the opening is in contact with the opening on the intake side of the fixed funnel. If this structure is adopted, when the rotation speed of the engine changes from low to high, the moveable funnel can be moved from the second position to the first position while the opening surface of the moveable funnel on the fixed funnel side is held parallel with the opening surface on the intake side of the fixed funnel. As a result, when the engine is rotating at high speed, air that enters through the fixed funnel having passed through the moveable funnel is able to flow linearly. Accordingly, it is possible to inhibit flow resistance of the air from increasing. As a result, when the engine is rotating at high speed, reduction of intake efficiency can be inhibited from occurring.

In the above structure, it is preferable that a turning amount of the link lever is adjusted such that the position of the opening surface of the moveable funnel on the intake side of the fixed funnel in the first position is the same as the position of the opening surface of moveable funnel on the intake side of the fixed funnel in the second position when viewed from an opening direction of the fixed funnel. If this structure is adopted, when the moveable funnel is moved from the second position to the first position (when the engine is rotating at high speed), all of the air that enters through the fixed funnel having passed through the moveable funnel is able to flow in a substantially linear manner. Accordingly, it is possible to inhibit flow resistance of the air from increasing.

The description still further discloses, in order to provide a vehicle that can inhibit reduction of the volume of a fuel tank disposed to the rear of a moveable funnel that varies air intake, an embodiment of a motorcycle (vehicle) which includes an engine 14 having an intake port 17a; a fixed funnel 27 that introduces air to the intake port 17a of the engine 14; a moveable funnel 28 that is moveably disposed on the intake side of the fixed funnel 27 and that introduces air to the intake port 17a of the engine 14 along with the fixed funnel 27; a parallel link 42 that moveable supports the moveable funnel 28; a fuel tank 12 disposed to the rear side of the moveable funnel 28 in a running direction of the motorcycle; and a motor 45 that is disposed, with respect to the moveable funnel 28, on the opposite side to the fuel tank 12, and that drives the parallel link 42 to move the moveable funnel 28.

The description still further discloses, according to a first preferred aspect, a vehicle comprising: an engine having an intake port; a fixed funnel that introduces air to the intake port of the engine; a moveable funnel that is moveably disposed on the intake side of the fixed funnel and that introduces air to the intake port of the engine along with the fixed funnel; a link mechanism that moveably supports the moveable funnel; a fuel tank disposed to the rear side of the moveable funnel when the vehicle is viewed from a side thereof; and a drive source that drives the link mechanism in order to move the moveable funnel, the drive source being disposed, if the moveable funnel is taken as a reference point, to the opposite side from the side where the fuel tank is disposed.

Further, according to a second preferred aspect, the vehicle may further comprise: a case in which the fixed funnel and the moveable funnel are disposed, wherein the link mechanism is disposed inside the case, and the drive source is disposed to the outside of the case.

Further, according to a third preferred aspect, an air filter portion is provided inside the case, and the drive source is positioned between an upstream side section and a downstream side section of the case, the upstream side section and the downstream side section being respectively upstream and downstream from the air filter portion.

Further, according to a fourth preferred aspect, the drive source includes a drive shaft that extends from the outside to the inside of the case, and the vehicle further comprises a seal member that seals a gap between the drive shaft and the case.

Further, according to a fifth preferred aspect, the seal member includes a bearing having a seal function, the bearing rotatably supporting the drive shaft of the drive source.

Further, according to a sixth referred aspect, the seal member includes an elastic member disposed in the gap between the drive shaft of the drive source and the case.

Further, according to a seventh preferred aspect, the drive source includes a motor, the motor includes a motor drive shaft that extends from the outside to the inside of the case, and the vehicle further comprises a turning lever that has one end side connected to the motor drive shaft, and that converts rotational motion of the motor drive shaft to linear motion.

Further, according to an eighth preferred aspect, the vehicle may further comprise: a connecting lever that connects the other end side of the turning lever to the link mechanism.

Further, according to a ninth preferred aspect, the link mechanism comprises a parallel link that has a plurality of link levers that moveably support the moveable funnel such that it is capable of parallel movement.

Further, according to a tenth preferred aspect, the link mechanism comprises a parallel link that has a plurality of link levers that moveably support the moveable funnel such that it is capable of parallel movement; and among the link levers, at least one of the link levers has one end that is connected to the connecting lever and has another end that is connected to the moveable funnel.

Further, according to a preferred eleventh aspect, in the case that the engine is rotating at high speed, the link levers turn in one direction to move an opening of the moveable funnel on the fixed funnel side to a first position at which the opening is away from an opening on the intake side of the fixed funnel, and in the case that the engine is rotating at low speed, the link levers turn in a second direction that is opposite to the first direction to move the opening of the moveable funnel on the fixed funnel side to a second position at which the opening is in contact with the opening on the intake side of the fixed funnel.

Further, according to a preferred twelfth aspect, a turning amount of the link levers is adjusted such that the position of an opening surface of the moveable funnel on the intake side of the fixed funnel in the first position is the same as the position of the opening surface of moveable funnel on the intake side of the fixed funnel in the second position when viewed from an opening direction of the fixed funnel.

## Claims

1. Vehicle comprising:
an engine (14) having an intake port (17a);
a fixed funnel (27) that introduces air to the intake port (17a) of the engine (14);
a moveable funnel (28) that is moveably disposed on the intake side of the fixed funnel (27) and that introduces air to the intake port (17a) of the engine (14) along with the fixed funnel (27);
**characterized in that**
a parallel link moveably supports the moveable funnel; **in that**
a fuel tank (12) is disposed to the rear side of the moveable funnel (28) in a running direction of the vehicle; and **in that**
a motor (45,65) is disposed, with respect to the moveable funnel (28), on the opposite side to the fuel tank (12), and that drives the parallel link (42) in order to move the moveable funnel (28).

2. Vehicle according to claim 1, further comprising a case, in which the fixed funnel and the moveable funnel are disposed, wherein the parallel link is disposed inside the case (25), and wherein the motor (45,65) is disposed to the outside of the case (25).

3. Vehicle according to one of the claims 1 or 2, wherein an air filter portion (26) is provided inside the case (25), and the motor (45,65) is positioned between an upstream side section (25c) and a downstream side section (25d) of the case (25), the upstream side section (25c) and the downstream side section (25d) being respectively upstream and downstream from the air filter portion (26).

4. Vehicle according to one of the claims 1 to 3, wherein the motor includes a drive shaft that extends from the outside to the inside of the case, and the vehicle further comprises a seal member that seals a gap between the drive shaft and the case.

5. Vehicle according to claim 4, wherein the seal member includes a bearing having a seal function, the bearing rotatably supporting the drive shaft of the motor.

6. Vehicle according to claim 4 or 5, wherein the seal member includes an elastic member disposed in the gap between the drive shaft of the motor and the case.

7. Vehicle according to one of the claims 1 to 6, wherein the motor includes a motor drive shaft that extends from the outside to the inside of the case, and the vehicle further comprises a turning lever that has one end side connected to the motor drive shaft, and that converts rotational motion of the motor drive shaft to linear motion.

8. Vehicle according to claim 7, further comprising a connecting lever that connects the other end side of the turning lever to the link mechanism.

9. Vehicle according to one of the claims 1 or 3 to 8, wherein the parallel link that has a plurality of link levers that moveably support the moveable funnel such that it is capable of parallel movement.

10. Vehicle according to one of the claims 1 or 3 to 8, wherein the parallel link that has a plurality of link levers that moveably support the moveable funnel such that it is capable of parallel movement; and among the link levers, at least one of the link levers has one end that is connected to the connecting lever and has another end that is connected to the moveable funnel.

11. Vehicle according to one of the claims 1 or 3 to 10, wherein in the case that the engine is rotating at high speed, the link levers turn in one direction to move an opening of the moveable funnel on the fixed funnel side to a first position at which the opening is away from an opening on the intake side of the fixed funnel, and in the case that the engine is rotating at low speed, the link levers turn in a second direction that is opposite to the first direction to move the opening of the moveable funnel on the fixed funnel side to a second position at which the opening is in contact with the opening on the intake side of the fixed funnel.

12. Vehicle according to claim 11, wherein a turning amount of the link levers is adjusted such that the position of an opening surface of the moveable funnel on the intake side of the fixed funnel in the first position is the same as the position of the opening surface of moveable funnel on the intake side of the fixed funnel in the second position when viewed from an opening direction of the fixed funnel.

## Patentansprüche

1. Fahrzeug, aufweisend:
eine Brennkraftmaschine (14) mit einer Einlassöffnung (17a),
einen feststehenden Luftschacht (27), der Luft in die Einlassöffnung (17a) der Brennkraftmaschine (14) einleitet;
einen bewegbaren Luftschacht (28), der auf der Einlassseite des feststehenden Luftschachtes (27) beweglich ist und der Luft in die Einlassöffnung (17a) der Brennkraftmaschine (14) gemeinsam mit dem feststehenden Luftschacht (27) einleitet;
**dadurch gekennzeichnet, dass**
ein paralleles Verbindungsglied beweglich den bewegbaren Luftschacht lagert dadurch, dass ein Kraftstofftank (12) auf der Rückseite des bewegbaren Luftschachtes (28) in einer Fahrtrichtung des Fahrzeuges angeordnet ist; und dadurch, dass ein Motor (45, 65) in Bezug auf den bewegbaren Luftschacht (28) auf der gegenüberliegenden Seite des Kraftstofftanks (12) angeordnet ist und der das parallele Verbindungsglied (42) antreibt, um den bewegbaren Luftschacht (28) zu bewegen.

2. Fahrzeug nach Anspruch 1, außerdem aufweisend eine Gehäuse, in dem der feststehende Luftschacht und der bewegbare Luftschacht angeordnet sind, wobei das parallele Verbindungsglied im Inneren des Gehäuses (25) angeordnet ist, und wobei der Motor (45, 65) an der Außenseite des Gehäuses (25) angeordnet ist.

3. Fahrzeug nach einem der Ansprüche 1 oder 2, wobei ein Luftfilterabschnitt (26) innerhalb des Gehäuses (25) vorgesehen ist und der Motor (45, 65) zwischen einem stromaufseitigen Abschnitt (25c) und einem stromabseitigen Abschnitt (25d) des Gehäuses (25) positioniert ist, und der stromaufseitige Abschnitt (25c) und der stromabseitige Abschnitt (25d) jeweils stromauf und stromab von dem Luftfilterabschnitt (26) sind.

4. Fahrzeug nach einem der Ansprüche 1 bis 3, wobei der Motor eine Antriebswelle enthält, die sich von der Außenseite zu der Innenseite des Gehäuses erstreckt und wobei das Fahrzeug außerdem ein Dichtungsteil aufweist, das einen Spalt zwischen der Antriebswelle und des Gehäuses abdichtet.

5. Fahrzeug nach Anspruch 4, wobei das Dichtungsteil ein Lager mit einer Dichtungsfunktion enthält, wobei das Lager drehbar die Antriebswelle des Motors lagert.

6. Fahrzeug nach Anspruch 4 oder 5, wobei das Dichtungsteil ein elastisches Teil enthält, angeordnet in dem Spalt zwischen der Antriebswelle des Motors und dem Gehäuse.

7. Fahrzeug nach einem der Ansprüche 1 bis 6, wobei der Motor eine Motorantriebswelle enthält, die sich von außerhalb nach innerhalb des Gehäuses erstreckt, und wobei das Fahrzeug außerdem einen Drehhebel aufweist, der eine Endseite mit der Motorantriebswelle verbunden hat und der eine Drehbewegung der Motorantriebswelle in eine lineare Bewegung umwandelt.

8. Fahrzeug nach Anspruch 7, außerdem aufweisend einen Verbindungsgliedhebel, der die andere Endseite des Drehhebels mit der Verbindungsvorrichtung verbindet.

9. Fahrzeug nach einem der Ansprüche 1 oder 3 bis 8, wobei das parallele Verbindungsglied eine Mehrzahl von Verbindungsgliedhebeln hat, die beweglich den bewegbaren Luftschacht derart abstützen, so dass er in der Lage ist, sich parallel zu bewegen.

10. Fahrzeug nach einem der Ansprüche 1 oder 3 bis 8, wobei das parallele Verbindungsglied eine Mehrzahl von Verbindungsgliedhebeln hat, die beweglich den bewegbaren Luftschacht derart abstützen, dass er in der Lage ist, sich parallel zu bewegen; und zwischen den Verbindungsgliedhebeln zumindest einer der Verbindungsgliedhebel ein Ende hat, das mit dem Verbindungsgliedhebel verbunden ist, und ein weiteres Ende hat, das mit dem bewegbaren Luftschacht verbunden ist.

11. Fahrzeug nach einem der Ansprüche 1 oder 3 bis 10, wobei in dem Gehäuse, in dem die Brennkraftmaschine mit hoher Drehzahl dreht, sich die Verbindungsgliedhebel in eine Richtung drehen, um eine Öffnung des bewegbaren Luftschachtes auf der feststehenden Luftschachtseite in eine erste Position zu bewegen, in der die Öffnung von einer Öffnung auf der Einlassseite des feststehenden Luftschachtes entfernt ist, und in dem Fall, dass die Brennkraftmaschine mit niedriger Drehzahl dreht, sich die Verbindungsgliedhebel in eine zweite Richtung drehen, die der ersten Richtung entgegengesetzt ist, um die Öffnung des bewegbaren Luftschachtes auf der feststehenden Luftschachtseite in eine zweite Position zu bewegen, in der die Öffnung mit der Öffnung auf der Einlassseite der feststehenden Luftschachtseite in Kontakt ist.

12. Fahrzeug nach Anspruch 11, wobei eine Drehgröße der Verbindungsgliedhebel derart eingestellt ist, dass die Position einer Öffnungsoberfläche des bewegbaren Luftschachtes auf der Einlassseite des feststehenden Luftschachtes in der ersten Position dieselbe ist wie die Position der Öffnungsoberfläche des bewegbaren Luftschachtes auf der Einlassseite des feststehenden Luftschachtes in der zweiten Position, wenn von einer Öffnungsrichtung des feststehenden Luftschachtes gesehen.

## Revendications

1. Véhicule comprenant :
un moteur thermique (14) comportant un conduit d'admission (17a),
une pipe fixe en forme d'entonnoir (27) qui introduit de l'air dans le conduit d'admission (17a) du moteur thermique (14),
un pièce mobile en forme d'entonnoir (28) qui est disposée avec une possibilité de mouvement sur le côté d'admission de la pipe fixe en forme d'entonnoir (27) et qui introduit de l'air dans le conduit d'admission (17a) du moteur thermique (14) en même temps que la pipe fixe en forme d'entonnoir (27),
**caractérisé en ce que**
une liaison parallèle supporte avec une possibilité de mouvement la pièce mobile en forme d'entonnoir, **en ce que**
le réservoir d'essence (12) est disposé à l'arrière de la pièce mobile en forme d'entonnoir (28) dans la direction de déplacement du véhicule, et **en ce que**
un moteur électrique (45, 65) est disposé, par rapport à la pièce mobile en forme d'entonnoir (28) sur le côté opposé du réservoir d'essence (12) et entraîne la liaison parallèle (42) afin de déplacer la pièce mobile en forme d'entonnoir (28).

2. Véhicule selon la revendication 1, comprenant en outre un carter dans lequel sont disposées la pipe fixe en forme d'entonnoir et la pièce mobile en forme d'entonnoir, dans lequel la liaison parallèle est disposée à l'intérieur du carter (25) et dans lequel le moteur électrique (45, 65) est disposé à l'extérieur du carter (25).

3. Véhicule selon la revendication 1 ou 2, dans lequel un filtre à air (26) est prévu à l'intérieur du carter (25), et le moteur électrique (45, 65) est positionné entre une section en amont (25c) et une section en aval (25d) du carter (25), la section en amont (25c) et la section en aval (25d) se trouvant respectivement en amont et en aval du filtre à air (26).

4. Véhicule selon l'une des revendications 1 à 3, dans lequel le moteur électrique inclut un arbre d'entraînement qui s'étend depuis l'extérieur jusqu'à l'intérieur du carter, et le véhicule comprend en outre un élément d'étanchéité qui obture un interstice entre l'arbre d'entraînement et le carter.

5. Véhicule selon la revendication 4, dans lequel l'élément d'étanchéité inclut un palier comportant une fonction d'étanchéité, le palier supportant avec une possibilité de rotation l'arbre d'entraînement du moteur électrique.

6. Véhicule selon la revendication 4 ou 5, dans lequel l'élément d'étanchéité inclut un élément élastique disposé dans l'interstice entre l'arbre d'entraînement du moteur électrique et le carter.

7. Véhicule selon l'une des revendications 1 à 6, dans lequel le moteur électrique inclut un arbre d'entraînement du moteur électrique qui s'étend depuis l'extérieur jusqu'à l'intérieur du carter, et le véhicule comprend en outre un balancier qui possède une extrémité reliée à l'arbre d'entraînement du moteur électrique et qui convertit le mouvement de rotation de l'arbre d'entraînement du moteur électrique en mouvement linéaire.

8. Véhicule selon la revendication 7, comprenant en outre un levier de raccordement qui relie l'autre extrémité du balancier au mécanisme de la liaison.

9. Véhicule selon l'une des revendications 1 ou 3 à 8, dans lequel la liaison parallèle qui possède une pluralité de leviers de liaison supporte avec une possibilité de mouvement la pièce mobile en forme d'entonnoir de telle sorte qu'elle puisse adopter un mouvement parallèle.

10. Véhicule selon l'une des revendications 1 ou 3 à 8, dans lequel la liaison parallèle qui possède une pluralité de leviers de liaison supporte avec une possibilité de mouvement la pièce mobile en forme d'entonnoir de telle sorte qu'elle puisse adopter un mouvement parallèle et, parmi les leviers de liaison, au moins l'un des leviers de liaison présente une extrémité qui est reliée au levier de raccordement et présente une autre extrémité qui est reliée à la pièce mobile en forme d'entonnoir.

11. Véhicule selon l'une des revendications 1 ou 3 à 10, dans lequel, dans le cas où le moteur thermique tourne à grande vitesse, les leviers de liaison tournent dans un sens afin de déplacer une ouverture de la pièce mobile en forme d'entonnoir sur la pipe fixe en forme d'entonnoir vers une première position dans laquelle l'ouverture se trouve à distance d'une ouverture pratiquée sur le côté d'admission de la pipe fixe en forme d'entonnoir et, dans le cas où le moteur thermique tourne à basse vitesse, les leviers de liaison tournent dans un second sens opposé au premier sens afin de déplacer l'ouverture de la pièce mobile en forme d'entonnoir sur la pipe fixe en forme d'entonnoir vers une seconde position à laquelle l'ouverture se trouve en contact avec l'ouverture pratiquée sur le côté d'admission de la pipe fixe en forme d'entonnoir.

12. Véhicule selon la revendication 11, dans lequel la valeur de rotation des leviers de liaison est ajustée de telle sorte que la position de la surface d'ouverture de la pièce mobile en forme d'entonnoir sur le côté d'admission de la pipe fixe en forme d'entonnoir dans la première position est identique à la position de la surface d'ouverture de la pièce mobile en forme d'entonnoir sur le côté d'admission de la pipe fixe en forme d'entonnoir dans la seconde position lorsqu'elle est visualisée depuis la direction d'ouverture de la pipe fixe en forme d'entonnoir.
